# EUROPEAN PATENT APPLICATION

(11) **EP 4 040 547 A1**
(43) Date of publication of application: **10.08.2022**
(21) Application number: 22154197.2
(22) Date of filing: 31.01.2022
(51) Int. Cl.: H01M 8/021, H01M 8/0228, H01M 8/0245, H01M 8/12

(54) **PROTECTIVE-LAYER-COATED-INTERCONNECTOR, CELL STACK INCLUDING THIS PROTECTIVE-LAYER-COATED-INTERCONNECTOR, AND FUELL CELL INCLUDING THE SAME**

(30) Priority: 03.02.2021 JP 2021016064
(71) Applicant: Toshiba Energy Systems & Solutions Corporation, Saiwai-ku Kawasaki-shi Kanagawa 2120013 (JP)
(72) Inventor: Kobayashi, Shohei, Kawasaki-shi, Kanagawa, 212-0013 (JP); Kameda, Tsuneji, Kawasaki-shi, Kanagawa, 212-0013 (JP); Asayama, Masahiro, Kawasaki-shi, Kanagawa, 212-0013 (JP); Yoshino, Masato, Kawasaki-shi, Kanagawa, 212-0013 (JP); Osada, Norikazu, Kawasaki-shi, Kanagawa, 212-0013 (JP); Inuzuka, Riko, Kawasaki-shi, Kanagawa, 212-0013 (JP)
(74) Representative: Hoffmann Eitle

(57) **Abstract**

Provided is a protective-layer-coated-interconnector, a cell stack, and a fuel cell. A component (particularly Cr) of the interconnector is prevented from diffusing even if the interconnector is exposed to high temperature for a long time. The interconnector has sufficient diffusion barrier-performance and protective performance even with a protective layer thinner than conventionally, is inhibited from being degraded through use, and has excellent electrical conductivity, adhesion, heat cycle resistance, and the like.

[Solution] A protective-layer-coated-interconnector, a cell stack including the interconnector, and a fuel cell including the interconnector, wherein the interconnector includes an interconnector material and a protective layer on the surface of the interconnector material, wherein the interconnector material is composed of a Fe-Cr alloy containing a rare earth element or a Zr element in a total amount of 1.0 weight% or less, and wherein the protective layer is composed of a Co oxide or an oxide containing: at least one element selected from the group consisting of Al, Ti, Cr, Fe, Ni, Cu, and Zn; and a Co element.

## Description

### FIELD

Embodiments of the present invention relate to a protective-layer-coated-interconnector, a cell stack including this protective-layer-coated-interconnector, and a fuel cell including the same.

### BACKGROUND

Hydrogen can be mentioned as one of the new energy sources. As an example of such utilization of hydrogen as an energy source, that which is attracting attention is a fuel cell, which enables hydrogen to react with oxygen electrochemically to convert the chemical energy to electrical energy.

Fuel cells have high energy utilization efficiency, and thus, are being actively developed as large-scale distributed power supplies, household power supplies, and transportation power supplies.

In general, fuel cells are classified according to the temperature range and the kinds of a material and fuel that are to be used. According to the electrolyte material to be used, fuel cells are classified into the polymer type, phosphoric acid type, molten carbonate type, and solid oxide. Among these, a solid oxide fuel cell (SOFC), which uses a solid oxide electrolyte, is attracting attention from an efficiency viewpoint.

However, hydrogen does not exist in nature, and this fact makes it desired to transport hydrogen into a hydrogen system containing a fuel cell. An electrochemical cell can cause a water electrolysis reaction, which is a reverse reaction of the fuel cell reaction, and thus, can produce hydrogen in a hydrogen system.

Examples of the hydrogen-production reaction include the following three types: an alkali water electrolysis type, polymer type, and solid oxide type. Among these, a solid oxide type is considered to have the highest hydrogen-production efficiency. A solid oxide electrochemical cell can highly efficiently cause either of the electrochemical reactions: fuel cell reaction or water electrolysis, and thus, is attracting attention.

A solid oxide electrochemical cell can have a large capacity in the form of a stack of cells stacked via an interconnector for a solid oxide electrochemical cell. In general, an interconnector for a solid oxide electrochemical cell involves high-temperature resistance, and thus, a base material to be used is often a stainless alloy having a high chromium content. In some cases, such an alloy causes an oxide-coated layer composed mainly of Cr₂O₃ to be formed on the surface at high temperature. Cr₂O₃ has a large electrical resistance, and thus, causes a decrease in the electrical conductivity of the interconnector, thus making it difficult to avoid an increase in the resistance of the solid oxide electrochemical cell stack. Additionally, if the Cr component in the Cr₂O₃-coated layer is gasified and sticks to the electrode portion of the solid oxide electrochemical cell, the performance of the solid oxide electrochemical cell is caused to decrease.

To inhibit these problems, materials to be used for an interconnector for a solid oxide electrochemical cell are widely under study. Examples of such technologies include: (a) a technology that studies a metal steel that has excellent oxidation resistance and forms an oxide-coated layer exhibiting electrical conductivity; and (b) a technology that studies a coated layer composition that provides a favorable coefficient of linear expansion to a metal steel and a protective layer.

As far as the present inventors know, such a metal that forms a coated layer exhibiting a favorable electrical conductivity on the surface thereof as in the technology (a) does not make it possible to completely stop Cr from diffusing, and thus, makes it difficult to prevent the degradation of a solid oxide electrochemical cell. For such a reason, it is general that the diffusing of Cr is inhibited by coating an interconnector material for a solid oxide electrochemical cell with a dense protective layer.

Examples of functions desired for such a protective layer include Cr diffusing inhibition, electrical conductivity, and adhesion. Cr contained in an interconnector material is diffused up to the surface through a protective layer if exposed to high temperature for a long time. Accordingly, to increase the durability of the solid oxide electrochemical cell stack, the layer thickness of the protective layer is increased so that the distance from the interconnector up to the surface of the protective layer can be increased, but as a result, the electrical resistance of the protective layer is increased, leading to causing a decrease in the reaction efficiency of the solid oxide electrochemical cell.

To minimize the layer thickness of the protective layer for the purpose of decreasing the electrical resistance, it is important to slow the diffusion velocity of Cr in the protective layer. The present inventors have found the formation control of the protective layer to be noteworthy as one method for the slowing, and have studied such formation control in detail.

In general, the path of ion diffusion is classified into "surface diffusion", "grain boundary diffusion", and "bulk diffusion". According to the difference in the constraining force to an ion of a diffusion species, the order of magnitude of diffusion velocity is as follows: "surface diffusion" > "grain boundary diffusion" > "bulk diffusion".

If the protective layer contains pores, the pore surface acts as a diffusion path of Cr ions. Accordingly, in cases where the shape of the pore in the protective layer extends in the direction normal to the face of the interconnector as in the technology (b), it is predicted that this pore surface acting as a high-velocity diffusion path of Cr leads to a decrease in durability.

To solve these problems, the present invention proposes providing a structure that has a protective layer form such that the growth mechanism of the oxide-coated layer is controlled to slow the diffusion of Cr in the protective layer.

### Solution to Problem

A protective-layer-coated-interconnector (first interconnector) according to an embodiment of the present invention is an interconnector including an interconnector material and a protective layer on the surface of the interconnector material,
characterized in that the interconnector material is composed of a Fe-Cr alloy containing a rare earth element or a Zr element in a total amount of 1.0 weight% or less, and
that the protective layer is composed of a Co oxide or an oxide containing: at least one element selected from the group consisting of Al, Ti, Cr, Fe, Ni, Cu, and Zn; and a Co element.

A protective-layer-coated-interconnector (second interconnector) according to an embodiment of the present invention is an interconnector including an interconnector material and a protective layer on the surface of the interconnector material,
characterized in that the interconnector material is composed of a Fe-Cr alloy containing a rare earth element or a Zr element in a total amount of 1.0 weight% or less, and
that the protective layer is composed of an oxide containing a rare earth element or a Zr element.

In addition, a cell stack according to an embodiment of the present invention is characterized by including a structural unit in which a solid oxide electrochemical cell containing a fuel electrode, an electrolyte layer, and an air electrode is sandwiched between the protective-layer-coated-interconnectors (the first interconnectors or the second interconnectors).

Furthermore, a fuel cell according to an embodiment of the present invention is characterized by including the cell stack.

### Advantageous Effects of Invention

For example, if a protective-layer-coated-interconnector according to an embodiment of the present invention is exposed to high temperature for a long time, a component (particularly Cr) of the interconnector is prevented from diffusing. Even if thinner than conventionally, the protective layer in particular has sufficient Diffusion barrier performance and protective performance, and is effectively inhibited from being degraded through use. Accordingly, provided is an interconnector maintaining a high degree of Diffusion barrier performance and protective performance and also having other enhanced characteristics (for example, electrical conductivity, adhesion, heat cycle resistance, and the like).

A protective-layer-coated-interconnector according to an embodiment of the present invention prevents the performance of the interconnector itself from being degraded by a diffused component, and prevents adverse influence (for example, the contamination, performance degradation, or the like of another constituent member or the like) due to a diffused component. As above-mentioned, other characteristics (for example, electrical conductivity, adhesion, heat cycle resistance, and the like) are also enhanced, and thus, make it possible to provide a cell stack and a fuel cell that have higher performance and higher durability.

### BRIEF DESCRIPTION OF THE DRAWINGS

FIG. 1 is a view depicting the constitution of a protective-layer-coated-interconnector according to an embodiment of the present invention.
FIG. 2A, FIG.2B, and FIG.2C are views depicting a cross-sectional structure (extract) of a cell stack according to an embodiment of the present invention.
FIG. 3 is a scanning electron micrograph of a cross-section of the protective-layer-coated-interconnector according to the embodiment of Example 1.
FIG. 4 is a scanning electron micrograph of a cross-section of the protective-layer-coated-interconnector according to the embodiment of Example 2.
FIG. 5 is a scanning electron micrograph of a cross-section of the interconnector of Comparative Example 1.
FIG. 6 includes scanning electron micrographs of crosssections of interconnectors and graphs demonstrating the energy dispersive X-ray spectroscopy results corresponding to the respective micrographs. FIG. 6A is for the cross-section of the protective-layer-coated-interconnector of Example 1, and FIG. 6B is for the interconnector of Comparative Example 1.

### DETAILED DESCRIPTION

Below, specific preferable examples of protective-layer-coated-interconnectors according to the present invention, specific preferable examples of cell stacks according to the present invention, and the like will be described, but the present invention is not limited to the below-mentioned embodiments or Examples. In this regard, the schematic views referenced in the below-mentioned description are drawings depicting the positional relationship among the constituents, and, for example, the thickness ratios among the layers in the drawings do not necessarily conform to those among the actual layers.

### < Protective-layer-coated-interconnector (1)>

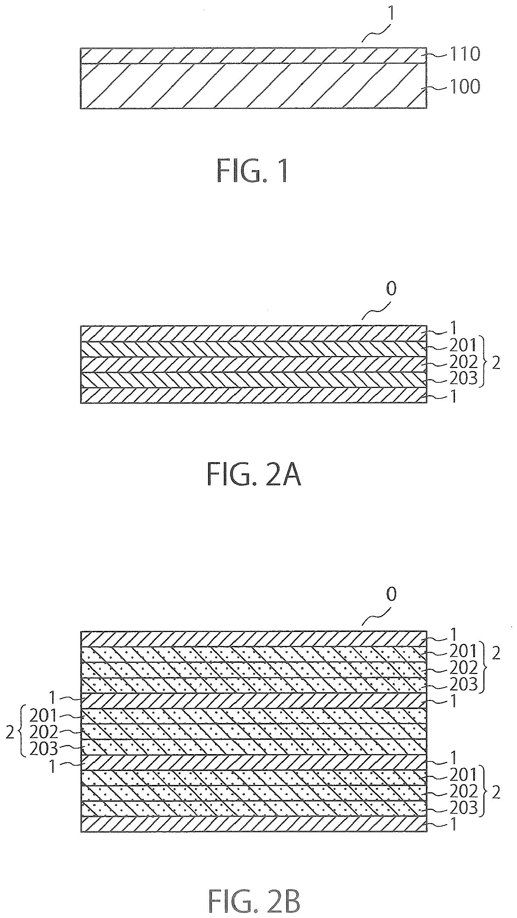

FIG. 1 is a schematic view depicting a cross-sectional structure of part of a protective-layer-coated-interconnector 1 according to the present invention.

The protective-layer-coated-interconnector 1 depicted in FIG. 1 is an interconnector having an interconnector material 100 and a protective layer 110 on the surface of the interconnector material.

Here, specific examples of protective layers include the following two kinds: "a protective layer composed of a Co oxide or an oxide containing: at least one element selected from the group consisting of Al, Ti, Cr, Fe, Ni, Cu, and Zn; and a Co element" (a first protective layer); and "a protective layer composed of a Fe-Cr-based alloy containing a rare earth element or a Zr element in a total amount of 1.0 weight% or less" (a second protective layer).

A protective-layer-coated-interconnector (first interconnector) according to an embodiment of the present invention has the protective layer (first protective layer), and a protective-layer-coated-interconnector (second interconnector) according to an embodiment of the present invention has the protective layer (second protective layer).

The protective-layer-coated-interconnector 1 according to the present invention, specifically depicted in FIG. 1, can be (a) an interconnector material 100 one face of which has one continuous protective layer formed thereon. Specific examples of other protective-layer-coated-interconnectors according to the present invention also encompass (b) an interconnector material 100 one face of which has a plurality of discontinuous protective layers formed thereon, (c) an interconnector material 100 one face of which has a plurality of protective layers stacked thereon, (d) an interconnector material 100 both faces of which each have one continuous protective layer formed thereon, (e) an interconnector material 100 both faces of which each have a plurality of discontinuous protective layers formed thereon, and (f) an interconnector material 100 both faces of which each have a plurality of protective layers stacked thereon; and the like.

The thickness of the protective layer is preferably 1 µm to 100 µm, particularly preferably a few micrometers to 20 µm. Bringing the thickness of the protective layer 110 to 1 µm to 100 µm makes it possible to sufficiently achieve the effects of a rare earth contained in the interconnector material 100. Furthermore, to ensure favorable electrical conductivity and facilitate uniform coating, the thickness of the protective layer is more desirably a few micrometers to 20 µm. In this regard, it is preferable that, in the interconnector, a portion the protective performance of which is important (for example, a region in contact with fuel, oxygen, or the like) is provided with a predetermined protective layer without exception, but if there exists a region the protection of which is not so desired or a region the protective performance of which is not desired, it is possible, if desired, that the thickness of the protective layer is made smaller, or that the protective layer is omitted. In other words, the thickness of the protective layer does not have to be uniform all over the surface of the interconnector material 100, and the layer thickness can vary from part to part.

### < Protective-layer-coated-interconnector (first interconnector)>

### < <Interconnector material> >

The interconnector material 100 is composed of a Fe-Cr alloy containing a rare earth element or a Zr element in a total amount of 1.0 weight% or less, and the protective layer 110 is composed of a Co oxide or an oxide containing: at least one element selected from the group consisting of Al, Ti, Cr, Fe, Ni, Cu, and Zn; and a Co element.

The interconnector material 100 is composed of a Fe-Cr alloy.

Furthermore, the interconnector material 100 contains a rare earth element or a Zr element in a total amount of 1.0 weight% or less. Here, the rare earth element refers to one of a total of 17 elements including: 2 elements of Sc and Y and 15 lanthanoid elements from La to Lu. Specific preferable examples of rare earth elements include Y, La, Ce, and the like. The interconnector material 100 can contain only one or two or more of the above-mentioned rare earth elements.

Alternatively, the interconnector material 100 can contain both the above-mentioned rare earth element and a Zr element, or can contain a Zr element without containing the rare earth element.

Alternatively, the interconnector material 100 can contain both the above-mentioned rare earth element and a Zr element, or can contain a Zr element without containing the rare earth element. The amount of the rare earth element or the Zr element contained in the interconnector material 100 (the total amount of the rare earth element and the Zr element in the case where the material contains both of them) is 1.0 weight% or less.

Containing the rare earth element in a maximum amount of 0.2%wt% and the Zr element in a maximum amount of 0.8 wt% makes it possible to obtain a higher effect, and in particular, containing a rare earth element such as La or Hf in an amount of 0.1 weight% or less and Zr in an amount of 0.1 to 0.5 wt% makes it possible to obtain a particularly marked effect.

### < <Protective layer (first protective layer)> >

The protective layer (first protective layer) 110 is composed of a Co oxide or an oxide containing: at least one element selected from the group consisting of Al, Ti, Cr, Fe, Ni, Cu, and Zn; and a Co element. In particular, a Co-based spinel type oxide, which exhibits favorable electrical conductivity, is a useful material. In addition, a material containing a Co element and an element selected from the group consisting of Al, Ti, Cr, Fe, Ni, Cu, and Zn makes it possible to obtain the effects of enhancing the electrical conductivity and decreasing the nonconformity in the coefficient of linear expansion with the interconnector material.

### < Protective-layer-coated-interconnector (second interconnector)>

### < <Interconnector material> >

The interconnector material 100 is composed of a Fe-Cr alloy containing a rare earth element or a Zr element in a total amount of 1.0 weight% or less, and the protective layer 110 is composed of a Co oxide or an oxide containing: at least one element selected from the group consisting of Al, Ti, Cr, Fe, Ni, Cu, and Zn; and a Co element.

The interconnector material 100 is composed of a Fe-Cr alloy.

Furthermore, the interconnector material 100 contains a rare earth element or a Zr element in a total amount of 1.0 weight% or less. Here, the rare earth element refers to one of a total of 17 elements including: 2 elements of Sc and Y and 15 lanthanoid elements from La to Lu. Specific preferable examples of rare earth elements include Y, La, Ce, and the like. The interconnector material 100 can contain only one or two or more of the above-mentioned rare earth elements.

Alternatively, the interconnector material 100 can contain both the above-mentioned rare earth element and a Zr element, or can contain a Zr element without containing the rare earth element. The amount of the rare earth element or the Zr element contained in the interconnector material 100 (the total amount of the rare earth element and the Zr element in the case where the material contains both of them) is 1.0 weight% or less.

Containing the rare earth element in a maximum amount of 0.2%wt% and the Zr element in a maximum amount of 0.8 wt% makes it possible to obtain a higher effect, and in particular, containing a rare earth element such as La or Hf in an amount of 0.1 weight% or less and Zr in an amount of 0.1 to 0.5 wt% makes it possible to obtain a particularly marked effect.

### < <Protective layer (second protective layer)> >

The protective layer (second protective layer) 110 is composed of an oxide containing a rare earth element or a Zr element, preferably composed of a Co oxide. Here, the rare earth element refers to one of a total of 17 elements including: 2 elements of Sc and Y and 15 lanthanoid elements from La to Lu. Specific preferable examples of rare earth elements include Y, La, Ce, and the like. The protective layer 110 can contain only one or two or more of the above-mentioned rare earth elements.

Alternatively, the protective layer (second protective layer) 110 can contain both the above-mentioned rare earth element and a Zr element, or can contain a Zr element without containing the rare earth element.

### < Protective-layer-coated-interconnector (2)>

In general, the Cr element reacts with oxygen or water vapor in the operating temperature range of a solid oxide electrochemical cell to vaporize, becoming a factor for decreasing the performance of the solid oxide electrochemical cell. To inhibit this, it is desired that the interconnector 100 containing Cr is coated with the protective layer 110 to ensure adhesion.

The present inventors have found the growth mechanism of an oxidized layer to be noteworthy, and have discovered that, in particular, controlling this mechanism leads to enhancing the adhesion.

Methods of growing an oxidized layer can be classified mainly into two types: one is an outward diffusion type of method in which metal ions in the vicinity of the surface of the interconnector material diffuse in an oxidized layer to grow the oxidized layer on the surface of the oxidized layer; the other is an inward diffusion type of method in which oxygen ions diffuse in an oxide film from the surface of the oxide film to the vicinity of the interconnector material to grow the oxidized layer at the interface between the metal material and the oxidized layer.

To enhance adhesion between the interconnector material 100 and the protective layer 110, the inward diffusion type is advantageous. This is because the outward diffusion type allows metal ions in the vicinity of the interconnector material to diffuse up to the surface of the protective layer 110, causing the former spaces for the metal ions to result in gaps in the vicinity of the interface between the interconnector material 100 and the protective layer 11. In addition, forming a coating of an inward diffusion type conceivably makes it possible to slow the generation velocity at which Cr forms an oxide coating through outward diffusion, and to inhibit an increase in the electrical resistance.

Trace amounts of the rare earth element and the Zr element present in the interconnector material 100 have the effect of making the oxidized layer growth mechanism of the protective layer 110 more based on inward diffusion type. This effect improves the adhesion of the protective layer, decreases the electrical resistance, and enhance the heat cycle resistance.

In the light of control of the growth mechanism of the protective layer 110 (first protective layer), the growth mechanism of an oxidized layer is not complicated with a protective layer constituted by an element(s) such as Co, Cr, Fe, Ni, Cu, and Zn, which are of an outward diffusion type, or an element(s) such as Al and Ti, which are of an inward diffusion type. Such a protective layer conceivably allows the effect of the rare earth element to be exhibited clearly. In particular, a Co-based spinel type oxide, which exhibits favorable electrical conductivity, is a promising candidate material. In addition, the presence of Cr, Fe, Ni, Cu, Zn, Al, or Ti in addition to Co makes it possible to hopefully expect the effects of enhancing the electrical conductivity and decreasing the nonconformity in the coefficient of linear expansion with the interconnector material.

In addition, using the rare earth element or the Zr element for the material of the protective layer (second protective layer) 110 conceivably makes it possible to make the oxidized layer growth mechanism of the protective layer 110 more based on inward diffusion type, and contributes to enhancement of adhesion between the interconnector 100 and the protective layer 110. An oxide of a rare earth element or a Zr element, used alone, has small electrical conductivity, but using an oxide constituted by a plurality of elements, such as a perovskite type of oxide, for example, (La,Sr)(Co,Fe)O₃, (La,Sr)MnO₃, (La,Sr)FeO₃, or (La,Sr)CoO₃, results in a protective layer having favorable electrical conductivity.

The protective layers 110 (first protective layer and second protective layer) can each contain an oxide having a perovskite type of crystal structure and/or an oxide having a spinel type of crystal structure, preferably contains a cobalt oxide in particular. Here, the crystal structure of a cobalt oxide can be determined, for example, by XRD (X-ray diffraction, XRD).

In addition, it is preferable that the protective layers 110 (first protective layer and second protective layer) each have pores in the protective layer. The existence ratio of pores in the protective layer 110 (that is, the porosity of the protective layer 110) is preferably 10 to 50 vol%, particularly preferably 10 to 20 vol%. Having the porosity within the above-mentioned range makes it possible to decrease, for example, the stress due to heat cycle, and thus, hopefully expect enhancement of the heat cycle resistance. Here, the porosity can be determined, for example, by SEM (Scanning electron Microscope).

In some cases, the pores in the protective layer 110 are a mixture of pores having substantially spherical shapes, elliptic shapes, and other shapes. The protective layer 110 according to an embodiment of the present invention preferably has pores in elliptic shape. Here, the shape and size of the pore and the ratio of pores in elliptic shape can be determined, for example, by SEM (Scanning electron Microscope).

Additionally, in the protective layer 110 according to an embodiment of the present invention, the longitudinal direction of the pore in elliptic shape is preferably arranged in the direction in parallel with the surface of the interconnector material.

The protective layer 110 in which the pores in elliptic shape are arranged makes it possible to delay the movement of the Cr element contained in the interconnector material 100 up to the surface of the protective layer 110.

In general, the path of ion diffusion is classified into surface diffusion, grain boundary diffusion, and bulk diffusion. These paths of ion diffusion have a difference in the constraining force of the surrounding element to ions to be diffused, and thus, exhibit a difference in the diffusion velocity. The diffusion velocity is larger in surface diffusion, but smaller in bulk diffusion. Accordingly, in cases where such pores exist, the pores the shape of which is elliptic and the longitudinal direction of which is arranged in parallel with the direction of the surface of the interconnector material 100 are effective to delay the movement of the Cr element up to the surface of the protective layer.

### <Method of producing protective-layer-coated-interconnector>

The protective-layer-coated-interconnector (first interconnector or second interconnector) according to an embodiment of the present invention can be produced by forming a protective layer on the surface of an interconnector material composed of a Fe-Cr-based alloy containing the above-mentioned rare earth element or Zr element in a total amount of 1.0 weight% or less.

The protective layer can be formed by applying an oxide material onto the surface of the interconnector material. Alternatively, the protective layer can be formed by allowing a metal material for formation of a protective layer to be applied onto the surface of the interconnector material, and then, oxidizing the metal material. That is, forming a protective layer may involve forming an oxide layer, or may involve forming a metal layer, followed by oxidizing the metal layer. In cases where the metal layer is formed and then oxidized, the interconnector having the protective layer thereon may be singly oxidized, or the interconnector, incorporated in a cell stack or a module, may be oxidized.

Examples of methods in which an oxide material or a metal material for formation of a protective layer is applied onto the surface of the interconnector material include: physical vapor deposition methods such as vacuum deposition and ion plating; chemical vapor deposition methods such as sputtering and pulsed laser deposition; a cold spray method; a thermal spraying method; an electrodeposition method; an electroless plating method; a rolling method; a spin coating method; a dip coating method; a sol-gel method; a doctor blade method; a screen printing method; an aerosol method; and the like. Among these, particularly an electrodeposition method, an electroless plating method, and a chemical vapor deposition method are preferable.

### <Cell stack>

A cell stack according to an embodiment of the present invention is characterized by including a structural unit in which a solid oxide electrochemical cell containing a fuel electrode, an electrolyte layer, and an air electrode is sandwiched between the above-mentioned protective-layer-coated-interconnectors (first interconnectors or second interconnectors).

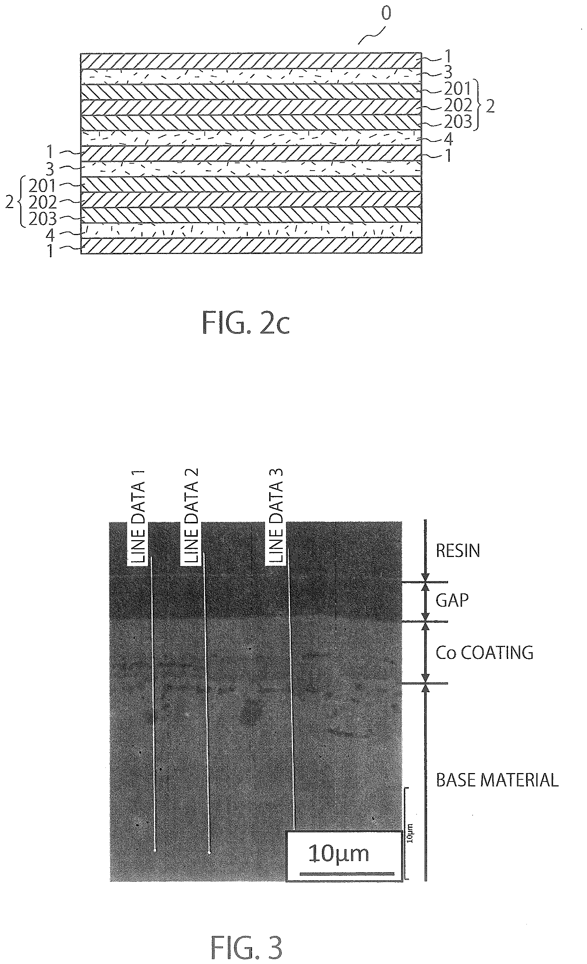

FIG. 2 includes schematic views each depicting part of a cross-sectional structure of a cell stack 0 according to an embodiment. In this regard, the schematic views are drawings depicting the positional relationship among the constituents, and, for example, the thickness ratios among the layers in the drawings do not necessarily conform to those among the actual layers.

The cell stack 0 has a stacked structure (FIG. 2B) in which a solid oxide electrochemical cell 2 containing a fuel electrode 201, an electrolyte layer 202, and an air electrode 203 is sandwiched between the protective-layer-coated-interconnectors (first interconnector or second interconnector) 1, forming a stack as one structural unit (FIG. 2A), which is repeatedly superposed in the direction in which the fuel electrode, the air electrode, and the like are stacked. Here, as shown in FIG. 2B, the "protective-layer-coated-interconnector 1 on the underside of the stacked structure" superposed thereon and the "protective-layer-coated-interconnector 1 on the upside of the stacked structure" disposed thereunder can be the interconnector shared between the "stacked structure" thereon and the "stacked structure" thereunder. That is, one protective-layer-coated-interconnector 1 can be used as the "protective-layer-coated-interconnector 1 on the underside of the stacked structure" thereon, and can be used as the "protective-layer-coated-interconnector 1 on the upside of the stacked structure" thereunder.

In this regard, one such structural unit as depicted in FIG. 2A can singly achieve the function of the cell stack of a fuel cell, and as depicted in FIG. 2B, forming a stacked structure in which the structural unit is repeatedly superposed makes it possible to increase the amount of electrochemical reaction.

Examples of a cell stack according to an embodiment of the present invention are not limited to a cell stack that includes only a fuel electrode, an electrolyte layer, an air electrode, and a protective-layer-coated-interconnector, but encompass a cell stack including other constituent members, materials, and the like in addition to the enumerated constituent members (that is, a fuel electrode, an electrolyte layer, an air electrode, and a protective-layer-coated-interconnector). Specific preferable examples of the above-mentioned other constituent members include a fuel electrode current-collecting member, an air electrode current-collecting member, and the like. As depicted in FIG. 2C, specific preferable examples of a cell stack according to the present invention include: a cell stack in which a fuel electrode current-collecting member 3 is disposed between the protective-layer-coated-interconnector 1 and the fuel electrode 201; and a cell stack in which an air electrode current-collecting member 4 is disposed between the air electrode 203 and the protective-layer-coated-interconnector 1.

In the cell stack depicted in FIG. 2C, the fuel electrode current-collecting member 3 and the air electrode current-collecting member 4 function as the flow paths of fuel gas, air, generated gas (for example, water vapor), and the like, make it possible to more efficiently carry out the supply of fuel gas and air to the cell stack 0, the discharge of generated gas, heat, and the like out of the cell stack 0, and the like, enhance the electrical contact between the solid oxide electrochemical cell 2 and the protective-layer-coated-interconnector 1, and thus, contribute significantly to enhancement of the performance of the cell stack and the fuel cell.

### <Fuel cell>

A fuel cell according to an embodiment of the present invention is characterized by including the cell stack.

Above, embodiments of the present invention have been described with reference to specific examples. The above-mentioned embodiments have each been described as one example of the present invention, and do not limit the present invention.

Additionally, in the description of each of the above-mentioned embodiments, the description of some portions and the like of the protective-layer-coated-interconnector, the cell stack, and the fuel cell is omitted if such portions are not directly related in the description of the present invention, but, if desired, other constituents as such portions can be suitably selected and used.

Besides, all the interconnectors, cell stacks, and fuel cells the designs of which can be suitably changed by a person skilled in the art are encompassed in the scope of the present invention to the extent that such items include the constituents of the present invention, and do not depart from the spirit of the present invention. The scope of the present invention is defined by the scope of the claims and the equivalents thereof.

### EXAM PLES

### <Example 1>

A cross-section of a protective-layer-coated-interconnector in Example 1 was subjected to scanning electron microscope (SEM) and energy dispersive X-ray spectroscopy (EDX).

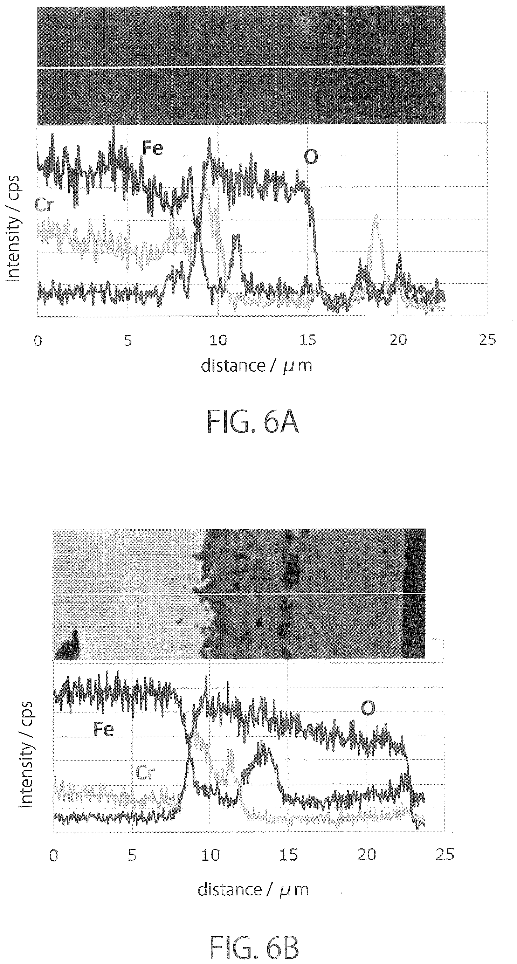

FIG. 3 is a scanning electron micrograph of the protective-layer-coated-interconnector, and FIG. 6A is a scanning micrograph of the protective-layer-coated-interconnector with a graph of the energy dispersive X-ray spectroscopy (EDX) results corresponding to the micrograph.

Here, in the graph of energy dispersive X-ray spectroscopy (EDX), the abscissa represents a distance from a predetermined cross-sectional position, and the ordinate represents the intensity of an element per unit time. That the intensity of a predetermined element in the ordinate direction is observed widely in the abscissa direction (distance) demonstrates that the predetermined element exists widely in the cross-sectional direction of the interconnector (that is, the layer in which the predetermined element exists is thick).

This cross-section of the protective-layer-coated-interconnector in Example 1 was subjected to scanning electron microscope (SEM) and energy dispersive X-ray spectroscopy (EDX).

FIG. 3 is a scanning electron micrograph of the protective-layer-coated-interconnector, and FIG. 6A is a scanning micrograph of the protective-layer-coated-interconnector with a graph of the energy dispersive X-ray spectroscopy (EDX) results corresponding to the micrograph.

Here, in the graph of energy dispersive X-ray spectroscopy (EDX), the abscissa represents a distance from a predetermined cross-sectional position, and the ordinate represents the intensity of an element per unit time. That the intensity of a predetermined element in the ordinate direction is observed widely in the abscissa direction (distance) demonstrates that the predetermined element exists widely in the cross-sectional direction of the interconnector (that is, the layer in which the predetermined element exists is thick).

### <Example 2>

A cross-section of a protective-layer-coated-interconnector in Example 2 was subjected to scanning electron microscope (SEM) and energy dispersive X-ray spectroscopy (EDX).

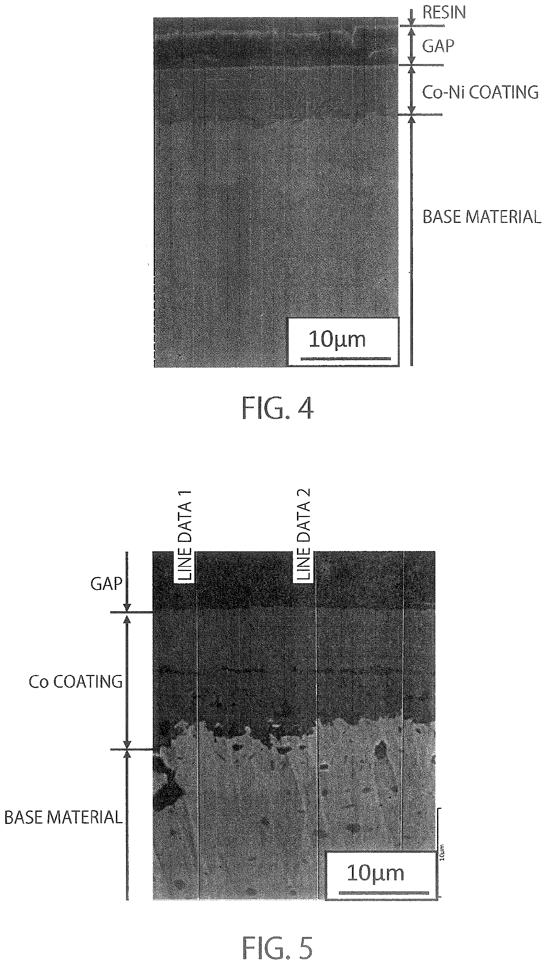

FIG. 4 is a scanning electron micrograph of the protective-layer-coated-interconnector.

### <Comparative Example 1>

A cross-section of an interconnector in Comparative Example 1 was subjected to scanning electron microscope (SEM) and energy dispersive X-ray spectroscopy (EDX).

FIG. 5 is a scanning electron micrograph of the interconnector, and FIG. 6B is a scanning micrograph of the interconnector with a graph of the energy dispersive X-ray spectroscopy (EDX) results corresponding to the micrograph.

### [Reference Signs List]

1: Protective-layer-coated-interconnector, 100: Interconnector material, 110: Protective layer, 0: Cell stack, 201: Fuel electrode, 202: Electrolyte layer, 203: Air electrode, 2: Solid oxide electrochemical cell, 3: Fuel electrode current-collecting member, 4: Air electrode current-collecting member

## Claims

1. A protective-layer-coated-interconnector comprising an interconnector material and a protective layer on the surface of the interconnector material,
wherein the interconnector material is composed of a Fe-Cr alloy containing a rare earth element or a Zr element in a total amount of 1.0 weight% or less, and
wherein the protective layer is composed of a Co oxide or an oxide containing: at least one element selected from the group consisting of Al, Ti, Cr, Fe, Ni, Cu, and Zn; and a Co element.

2. A protective-layer-coated-interconnector comprising an interconnector material and a protective layer on the surface of the interconnector material,
wherein the interconnector material is composed of a Fe-Cr alloy containing a rare earth element or a Zr element in a total amount of 1.0 weight% or less, and
wherein the protective layer is composed of an oxide containing a rare earth element or a Zr element.

3. The protective-layer-coated-interconnector according to claim 1 or 2, wherein the protective layer contains an oxide having a perovskite type of crystal structure or an oxide having a spinel type of crystal structure.

4. The protective-layer-coated-interconnector according to claim 1 or 2, wherein the protective layer has pores in the layer, and has a porosity of 10 to 50%.

5. The protective-layer-coated-interconnector according to claim 1 or 2, wherein the protective layer has pores in the layer, and wherein the longitudinal direction of the pore is arranged in the direction in parallel with the surface of the interconnector material.

6. The protective-layer-coated-interconnector according to claim 1 or 2, wherein the protective layer has a thickness of 1 to 100 µm.

7. A cell stack comprising a structural unit in which a solid oxide electrochemical cell containing a fuel electrode, an electrolyte layer, and an air electrode is sandwiched between the protective-layer-coated-interconnectors according to claim 1 or 2.

8. A fuel cell comprising the cell stack according to claim 7.
